# EUROPEAN PATENT SPECIFICATION

(11) **EP 4 274 761 B1**
(45) Date of publication and mention of the grant of the patent: **06.08.2025**
(21) Application number: 22703460.0
(22) Date of filing: 05.01.2022
(51) Int. Cl.: B60L 53/126, B60L 53/16, B60L 53/22, B60L 53/36, B60L 53/37

(54) **ELECTRICITY AND DATA COMMUNICATION ACCESS TO UNMANNED AERIAL VEHICLES FROM OVERHEAD POWER LINES**
ELEKTRIZITÄTS- UND DATENKOMMUNIKATIONSZUGANG ZU UNBEMANNTEN LUFTFAHRZEUGEN VON FREILEITUNGEN AUS
ACCÈS À L'ÉLECTRICITÉ ET À LA COMMUNICATION DE DONNÉES POUR VÉHICULES AÉRIENS SANS PILOTE À PARTIR DE LIGNES ÉLECTRIQUES AÉRIENNES

(30) Priority: 05.01.2021 IS 50332; 10.11.2021 IS 50347
(43) Date of publication of application: 15.11.2023
(73) Proprietor: Laki Power ehf., 104 Reykjavik (IS)
(72) Inventor: VALTYSSON, Oskar H., 201 Kopavogur (IS); PETURSSON, Einar, 112 Reykjavik (IS)
(74) Representative: Arnason Faktor
(86) International application number: PCT/IS2022/050001
(87) International publication number: WO 2022/149173

(56) References cited:
- EP-A1- 3 790 799
- JP-A- 2018 199 403
- US-A1- 2019 347 942
- US-A1- 2020 011 487
- US-A1- 2020 071 001
- US-A1- 2020 290 752

## Description

### Field of the invention

The invention relates to devices and systems enabling the docking and charging of unmanned aerial vehicles (UAVs) on docking stations that can be arranged on overhead power lines or other above ground structures. The systems provide electrical power and data communication transmission to UAVs on an overhead power line utilising power from the power line by power inductive power harvesting.

### Background

Surveillance and proper maintenance of overhead powerlines in transmission and distribution power grids, is crucial for secure operation of the said power grids. Environmental factors such as those causing untimely aging of critical parts in the powerline structures, can lead to unexpected outages, costing grid operators and their customers thousands and even millions of dollars per outage. Also, vegetation and other obstructions close to the power lines can cause outages and even start wildfires if left unattended.

Access to electrical power is the most limiting factor in improving the monitoring and surveillance of overhead power transmission lines. Such lines stretch across vast distances and frequently traverse through remote areas where no other infrastructure is present. Despite the fact that the power lines carry electricity, it is usually impossible to use that electricity directly because its voltage is far higher than ordinary electric equipment can withstand without expensive and massive transformers. Although less expensive, there are options of installing diesel generators, wind turbines, solar panels and/or batteries to power monitoring equipment or use very long electric cables, often buried underground, to connect to proper voltage levels at the nearest substation.

Operators of overhead powerlines are already discovering the usefulness of drones (UAVs) for inspecting their power grid infrastructure. Drones for monitoring are usually equipped with high resolution cameras and thermographic sensors that can scan the power structure in search of damaged mast steal, bolts, rust, or other type of corrosion. Also, the thermographic sensors can detect damages in insulator chains, damages on conductors caused by lightning strikes, issues related to birds nesting in or on pylons and so forth. The main disadvantage using drones for the inspection of powerline structure and conductors, is the need for specialized service personnel escorting and operating the drones through the whole inspection process, often traversing through harsh and remote terrain. At regular intervals the drones' batteries must be recharged or exchanged for fully charged batteries. Therefore, inspecting powerline infrastructure stretching tens or even hundreds of kilometres require lot of manpower and can take many days and up to some weeks to fully complete, when using manually operated drones.
US 2020/290752 discloses a docking and charging station for an unmanned aerial vehicle.

A novel approach is to use power harvesting devices mounted on the conductors of overhead power lines. WO 2019/030781 discloses a power harvesting and surveillance device using one or several current transformers and associated rectification and power regulating circuitry to generate a direct current power output from the electromagnetic field generated by the alternating current passing through phase wires of high voltage power lines.

### Summary of the invention

The present invention relates in a first aspect to a device configured to be located on an overhead power line that has an external power connection(s) to be used for powering third-party electrical equipment and devices such as in particular unmanned aerial vehicles (UAVs), commonly referred as drones (both terms are used herein interchangeably). The power can be supplied permanently such as for surveillance equipment and devices, or temporarily such as for charging drones that attach to the device. The device can also provide network and data communication services to the equipment, e.g., by enabling data to be transmitted from and to a docking drone and update control instructions, for example new flight navigation plan, to be transmitted to the drone, or by using wireless communications between the device and the third-party equipment such as a flying drone, a mobile phone or battery powered Internet of Things (IoT) objects. Finally, the device provides data processing for third-party equipment thereby eliminating the need for such power-intensive operations to be performed by the equipment thus saving it power for other operations.

A system is provided herein comprising a UAV Docking and Charging Station (also referred to herein as **DDC station** (drone docking and charging station?). The DDC station comprises a housing configured to be fastened to an above-ground structure providing ground clearance underneath the housing, a power supply unit, a communication module, and a docking port arranged underneath the housing, for receiving and docking a mating docking and unit of a suitably configured UAV, where the docking port and a docking unit on the UAV provide an electrical connection for charging a docked UAV.

In some embodiments the DDC is arranged to be clamped onto a structure, such as a horizontal portion of a light pole or a mast structure and the power supply unit may obtain electricity from an external power source. More preferably, the DDC is arranged to be clamped onto a conductor of overhead power lines, wherein the DDC comprises a power harvesting section for harvesting power from the electromagnetic field surrounding the conductor.

The DDC station is arranged with a charging unit, preferably the charging unit allows for fast-charging of a docked drone. Fast-charging refers to charging that is faster than by what can be generated simultaneously by the power harvesting, typically this would be through the use of a super capacitor, that can load energy and quickly unload, this technology is a such known in the art.

The docking port of the DDC station is arranged to safely receive and securely fasten a mating UAV (i.e. a UAV comprising docking or anchoring means as further described herein, for mating with the docking port), preferably the docking port comprises a guiding and securing portion for controllably docking, securing, storing/parking, and releasing the UAV. The guiding portion may for example, comprise a funnel-shaped structure. The guiding and securing portion preferably comprises as well a clamping or gripping mechanism for securing the docking and charging unit of the UAV to the DCC station.

In some embodiments the docking port is configured as a unit to be secured and fixed to the main housing of the DDC station, in other embodiments the docking port is an integral part of the DDC station housing.

As further described herein below in more detail, the DDC station may in some embodiments advantageously comprises one or more of Infrared Serial Transceiver(s), LiDAR sensor(s), an RTK base station, and one or more high-resolution camera; these devices and components can aid in the accurate navigation of a UAV to the drone docking unit.

In another aspect, the invention provides a system for providing docking, charging and/or data communication with UAVs, the system comprising a DDC station as described above and one or more UAVs, arranged to mate and dock to the DDC station.

The UAV of the system of the invention comprises a docking unit for securely mate and dock with the docking port of the DDC station. Preferably the docking unit of the UAV comprises a docking probe and a connecting head or anchor having a mating structure to the docking port. The docking unit can be an integral part of the body our housing of the UAV or alternatively can be arranged as a removable unit that can be securely fastened and connected to the UAV. Preferably, the docking unit probe is configured such it can be positioned in a resting mode or flight mode during flight of the UAV, and a docking mode, for docking. Thus, for example, in the resting mode, the probe can be positioned substantially horizontal, e.g. by folding via a hinge mechanism, and in the docking mode, the probe can be erected in a substantially vertical position.

It follows that the docking unit should provide both a secure anchoring connection and also an electrical connection between the UAV and the DCC station, for charging and data transmission.

The UAV docking unit is preferably arranged on the top of the UAV (its main body or housing) and will typically comprises an extension that reaches upwardly for connection to the docking port of the DDC station.

In some embodiments the UAV docking unit is provided as a Docking and Connection Equipment (**DCE**) that is strapped or otherwise mounted or fixed on the UAV. This enables a drone that is equipped with a **DCE,** and needs charging of its batteries, to find the nearest **DDC** station and from underneath the **DDC** station dock to it by the aid of a special docking mechanism that docks the **DCE** and the drone it is mounted on securely in place underneath the **DDC** station, for charging of the drone's batteries, data transmission etc.

Such Docking and Connection Equipment (**DCE**) is provided as a stand-alone part of the present invention. Also a part of the invention is a UAV with either externally mounted DCE or integral DCE, as described herein.

When the **DDC** station is clamped onto a conductor of high voltage power lines it can harvests all the electric power needed using the electromagnetic field surrounding alternating carrying conductors. As mentioned above, in some embodiments the **DDC** station can be mounted on light poles or other structures and in these embodiments the DCC can be connected to a conventional power outlet, for example 120VAC or 230VAC.

The **DCE** can be mounted on top of most types of drones. Either the **DCE** may be permanently attached to the back of the drones in question, or it can be temporarily attached with the appropriate fastening equipment. In one embodiment a kind of bridle is provided that will be fastened under the drone's body, in a similar manner as a saddle is mounted on a horse back. An intermediate layer of a light but stiff foam material, formed to tightly fit the shape of the body of the drone can be positioned between the drone and the **DCE** to which it is attached, whether the **DCE** is permanently or temporarily attached to the drone with an appropriate harness. In some embodiments the **DCE** electronics and mechanical parts, can be an integrated part of the drones themselves, for example specialized inspection drones or drones used for package delivery.

As mentioned above, in some embodiments the DDC station can be clamped onto a conductor of high voltage power lines and harvests power from the electromagnetic field that surrounds AC carrying conductors. The harvested power is used to power devices within the **DDC** station and is also used to charge external devices, for example the UAVs, that have the proper mating equipment for docking and connecting electrically to the **DDC** station.

In some embodiments the docking port at the bottom of the **DDC** station comprises a cone shaped funnel. The docking port will also comprise a fastening or locking mechanism to fasten and secure a docked UAV, this may, for example, comprise a rotating hemispherical locking mechanism with a cleaver. The rotating hemispherical locking mechanism is located at the upper and narrow end of the funnel and rotates in a semicircle around the hemispherical top of the docking probe of the **DCE** when present. When the hemispherical locking mechanism of the **DDC** station has rotated in a semicircle around the hemispherical top of the docking probe of the **DCE,** and locked it tightly in place, an electrode that carries the charging current, presses down to the centre of the hemispherical top of the docking probe and connects to a mating electrode there that connects the charging current to the **DCE** and from there to the battery charging port of the drone.

In some embodiments a stepper motor in the **DDC** station rotates the hemispherical shaped locking mechanism to lock the docking probe of the **DCE** in place for the charging process and rotates it back for releasing the **DCE** and drone after the charging process is complete. The cleavage in the hemispherical mechanism is wide at the edge of the sphere but then narrows close to the docking probe rod when the hemispherical locking mechanism rotates around the hemispherical top of the **DCE'**s docking probe.

In some embodiments the Docking and Connection Equipment (**DCE**) comprises a specially designed electronic circuit that controls all the **DCE** functions and at least some of the communications between the **DDC** station and the drone attached to it. The housing of the **DCE** is preferably made of light and strong material for instance carbon fibre. The housing preferably has electric screening properties that prevents interruptions and malfunction in the control and navigation electronics due to high voltages spikes and electric discharge occurrence when close to or when touching and releasing from **DDC** station clamped onto conductor of a high voltage power line. The docking probe, which is made of conductive material or comprises an internal conductor, and is located on top of the UAV or its **DCE,** has two functions, to dock and attach the drone securely to the **DDC** station and to connect the charging current from the **DDC** station through the **DCE** to the battery charging port of the drone. The drone reports to the **DDC,** either directly or through the **DCE,** the voltage level of the drone's battery pack (3.7V - 7.4V - 11.1V - 14.8V - 18.5 - V22.2V - etc.) and the charging rate curve. When the drone is in flight, the docking probe is lowered into horizontal position to minimize as possible its effect on the drone's flight ability.

In some embodiments the number of docking probes may be one, two or four on each **DCE,** depending on the weight of the drones with full payload it is attached to. For lighter types of drones, for example those who are under 10kg with full payload, it is sufficient to have one docking probe. For heavier drones, two or four docking probes can be used. An electric motor, for example stepper motor, can be arranged to take care of erecting the docking probe in the docking position and lowering it to the rest or flight position, as appropriate. In addition, the docking probes can be extendable (telescopic).

In some embodiments the docking probes are made of light and strong conductive material, for example carbon fibre, that can withstand substantial weight and mechanical stresses. In some embodiments a hemispherical shaped cup at the end of the docking probe serves two purposes. One, it ensures that the drone is securely attached to the docking port of the **DDC** station when the bowl-shaped locking mechanism of the **DDC** station is locked around the hemispherical shaped cup on the docking probe. The other is to connect the charging current from the **DDC** station through to the **DCE.** The **DCE** then connects the charging current to the drone via separate cable.

In some embodiments there are two or more, such as four, Serial Infrared Transceivers on the **DCE,** e.g. one in or near each corner. The infrared transceivers communicate with corresponding transceivers on the bottom of the **DDC** station to enable the **DCE** and the drone it is attached to, to be precisely guided the last distance before connecting to the **DDC** station. Preferably, the view angles of the infrared transceivers are kept narrow to ensure that the transceivers must be in direct line of sight with each other, that is, the **DCE** docking probe must be almost directly below the centre of the **DDC** station to find way into the docking funnel and the charging port of the **DDC** station. Each infrared transceiver may have its own identification code to facilitate the drone's guidance, that is the correct azimuth heading, location and height relative to the **DDC** station as it approaches the station, so the docking probe lands directly in the docking funnel and underneath the **DDC** station, correctly positioned and oriented. The infrared transceivers may also be used for data communication between the **DDC** station and the **DCE** equipment, such as in particular when electrostatic noise interrupts radio communication and prevents WiFi, Bluetooth, Zigbee or other radio-based communications from working properly because of the electrostatic discharge and interrupting electrostatic noise occurring when the docking probe of the **DCE** equipment touches the docking funnel of the **DDC** station or when the **DCE** equipment is released (un-docked) from the **DDC** station. The present invention provides an apparatus, a method and a system for providing access to electrical power and/or network/data communications in locations where an overhead power line is present. The electrical power and data communications may be supplied to equipment for monitoring environmental conditions such as weather, vegetation growth, flame and vegetation incident detection, line slapping, lightnings, sparks and forest fires. The solution provided herein may be used in remote areas, where access to electrical power is the most limiting factor in improving the monitoring and surveillance of overhead power transmission lines and the area surrounding a power grid. Power lines present therefore the only infrastructure in such areas and with the present apparatus and system, power and data communication are made possible. The equipment may also be used for surveillance operations such as for vehicle traffic or CCTV, or to provide wireless data communications to drones, mobile phones and IoT objects. The present invention also provides a system for obtaining and analysing data on the device or for sending the raw data and/or processed results back to the third-party equipment or to a remote operational platform.

In some embodiments, the power harvesting section of the drone docking station presented herein uses a power harvesting and regulation technology, where one or more current transformer unit having its own a short-circuiting shunt, a rectification circuit, a smoothing capacitor, and are parallel connected to a common power supply output. In some embodiments the power harvesting section comprises a plurality of current transformer unit being connected in parallel. The power harvesting section of the surveillance device further operates with a shunting method which totally short-circuits the secondary winding of each current transformer when not needed, which terminates power harvesting of that transformer section and minimizes magnetic flow and disturbance in the current transformer cores. Furthermore, a common load is connected to the DC power output connection of each rectifier of the current transformer unit(s) in parallel providing a power harvesting system with cold regulation which makes it feasible to provide charging stations on overhead power lines. The common load of the power harvesting system may comprise the auxiliary devices of the apparatus as well as a charging unit or a power storage device.

In some embodiments the system of the present invention provides docking stations for drones (UAVs), where the drones can be securely stored and charged on a docking station on an overhead power line. The docking stations harvest and store power from the power lines and are able to use visual and/or wireless communication to guide the drones for accuracy of the landing and docking process. The docking station may further comprise means for receiving and communication data obtained by the drones to a remote platform. The data obtained by the drones can be used for observing and communicating real-time environmental data or events. Furthermore, consistent and accurate data reflecting environmental conditions and events such as forest fires is collected by the system of the present invention and can be used for predicting such events, for example by the aid of machine learning (ML) and artificial intelligence (AI). Furthermore, the docking station can provide data updates to the drones, e.g. an updated flight route, that is the result of data processing in the device or relayed from a remote operational platform.

In some embodiments the docking station of the present invention does not require an external power source, as it is autonomously powered by a power harvesting section harvesting electric energy from the electromagnetic field surrounding a phase wire. The exterior of the docking station may be designed to prevent corona discharge and to withstand harsh weather conditions. This includes selection of material for the housing of the docking station, formation of the parts making up the housing and selection of the material used for securing the docking station on power lines.

In some embodiments the system of the present invention provides data processing services for third-party equipment such as but not limited to drones. Such services may be supplied for a single connected third-party equipment such as for image processing from footage from a drone to analyse vegetation growth or for fire detection. Such services may also be supplied for a plurality of unrelated or related third-party devices such as a fleet of drones that sends data for processing on the device and results in, for example, updated flight paths that are sent back to each drone.

One or more of the following embodiments alone or in combination contribute to solving the problems of providing a power outlet and data communication apparatus adapted to be clamped onto a phase wire of high voltage power line: a) a connection/docking structure is attached to or a physical part of the housing of a docking and charging station to secure a drone as it is supplied with electricity for operations or charging on the drone, and which is mounted on an overhead power line, b) a power harvesting section in the docking and charging station having a plurality current transformer units with their DC connections connected to a common load in parallel, c) means of communication between the docking and charging station and the drone for securing safe docking onto the docking and charging station, and d) means of data communications between the docking and charging station and the drone.

### Brief description of Figures

Figure 1 shows an embodiment of a docking and charging station mounted on a phase wire of an overhead power line, with a docking port for docking a UAV. Also showing a UAV with a docking probe for mating with the docking port.
Figure 2 illustrates communication devices on the docking and charging station.
Figure 3 shows a UAV of the invention, with a docking probe in docking mode (A) and resting/flying mode (B).
Figure 4 shows a UAV approaching (A) and docking (B) to a docking and charging station.
Figure 5 shows a docking and charging station mounted on a light pole.
Figure 6 shows a shelter in a mast structure for parking a UAV.
Figure 7 illustrates alignment of a UAV to a docking station using multiple Infrared Serial Transceivers.
Figure 8 shows parts of a communication protocol with data commands and response messages from a UAV to the docking and charging station.
Figure 9 shows parts of a communication protocol with data commands and response messages sent from a docking and charging station to a UAV or DCE
Figure 10 shows data strings samples showing data payload sent between a UAV and docking and charging station.

### Description of the invention

The object(s) underlying the present invention is (are) particularly solved by the features defined in the independent claims. The dependent claims relate to preferred embodiments of the present invention. Further additional and/or alternative aspects are discussed below.

Thus, at least one of the preferred objects of the present invention is solved by a system for providing docking, charging and/or data communication with UAVs (drones). The system comprises i) at least one docking and charging station, further comprising: a) a housing, b) a power supply unit, and c) a communication module, and ii) one or more UAVs. The housing of the at least one docking and charging station further comprises a docking and charging unit preferably arranged underneath of the housing for controllably receiving, charging and releasing the one or more drones. Furthermore, the one or more drones comprises a docking and connecting unit to for docking to the docking and charging unit, said drone docking and connection unit being arranged on the top surface of the one or more drones.

In the present context the terms "overhead power line" "phase wire", "power transmission line" and "conductor" refer to a wire conductor intended to transmit electricity at high or low voltage levels as an overhead power line. The operating voltage of overhead power transmission lines may range from low voltage lines with less than 1000 volts to ultra-high voltage overhead lines with voltage levels higher than 800 kV.

In the present context the terms "operational platform" and "remote data platform" refer to a remote centralized software and data platform, or operational and management system for receiving data from the docking electronic devices such as drones and drone docking and charging station clamped onto conductor of an overhead power lines.

In the present context the terms "docking and charging station", "drone Docking and Charging Station (**DDC**)" and "apparatus" refer to an apparatus having a power supply and communication devices where the apparatus is arranged for a drone to fly and dock underneath the housing of the apparatus.

In the present context the terms "docking and connecting unit" and "Docking and Connection Equipment (**DCE**)" refer to a connecting device which can be mounted onto a drone or designed as an integral part of a drone where a part of the connecting device can be erected and connected to a mating structure of a drone docking and charging station.

All embodiments listed below relate to both the apparatuses, system and the method of the present invention.

In an embodiment of the present invention the system further comprises a remote data platform for receiving data obtained by drones and sending to the at least one docking and charging stations.

In an embodiment of the present invention the docking and charging station further comprises a power storage device and a power outlet for connecting to drones.

In an embodiment of the present invention the power storage device is a supercapacitor energy storage device for aiding in fast charging of the drones.

In an embodiment of the present invention the data communication module communicates with one or more drones either wirelessly or using wired connection.

In an embodiment of the present invention the wireless communication comprises one or more of mobile networks, satellite networks, Wi-Fi, Bluetooth or narrowband IoT, optical guiding means, sound guiding means or visual means such as markers or QR code identification labels, 3GPP based cellular networks such as GSM, UMTS, LTE, LTE-M, EC-GSM-IoT and 5G-NR, wireless local area networks including IEEE 802.11, Wireless Personal Area Networks including IEEE 802.15 (e.g. Bluetooth, ZigBee, Z-Wave, LoRa), RFID, optical communications including visual lighting and laser, sound communications, and visual communications such as markers and QR codes.

In an embodiment of the present invention the external devices are devices selected from, but not limited to, cameras, sensors, drones, computers, mobile phones, Internet of Things (IoT) objects, aircraft, satellites, broadband mobile network cells, Global Positioning System (GPS), and other data transceiver devices.

In an embodiment of the present invention the docking and charging station comprises a docking and charging portion for controllably securing, storing, charging and releasing drones from the docking and charging station.

In an embodiment of the present invention the docking and charging station further comprises means for collecting, storing, processing and communicating data received from drones to a remote data platform, and for communicating data from the remote data platform to drones.

In an embodiment of the present invention the docking and charging station and/or the remote data platform further comprise data processing means for processing data received from the drones.

In an embodiment of the present invention the data processing comprises carrying out operations on data to transform or classify information including, but not limited to, averaging of data series over specified periods of time, frequency analysis transformations, calculation of conductor status including sag, clearance, tension, temperature and current, conductor vibration analysis including line slapping and galloping, identification of line icing conditions and ice load, detection of fire incidents on and around the power line including sparks, flames and wildfires, detection of vegetation and wildlife contact, detection of grid faults events and their location, and image and video processing. Data processing also refers to any transformation or classification of information unrelated to the power line and the power grid.

In an embodiment of the present invention the data processing comprises image analysis of image data for single images, multiple images and/or HD video data provided by drones.

In an embodiment of the present invention the system comprises one or more drones for obtaining data on power lines and mast structures on a power grid and/or the area surrounding a power grid.

In an embodiment of the present invention the image data is fed through machine learning (ML) and artificial intelligent (AI) processes providing real-time reports, forecasts and future optimisation and increased accuracy of events related to the data.

In an embodiment of the present invention the data processing is used to locate the position of objects or events occurring on or near the power line, such as, but not limited to, line fault events, fires and line icing.

In an embodiment of the present invention, the power outlet in the housing of the docking and charging station forms the docking socket for releasably securing drones to the housing of the docking and charging station.

In an embodiment of the present invention, the docking and charging portion is adapted to be releasably attached to the housing of the apparatus, and wherein the docking and charging portion is designed to fit underneath or onto the housing of the apparatus and to form a docking portion to drones to be docked and charged.

In an embodiment of the present invention, the docking and charging portion further comprises a power socket connected to the power outlet.

In an embodiment of the present invention, the apparatus further comprises a power outlet for supplying power to or charging of drones.

In an embodiment of the present invention, the apparatus further comprises a power storage device.

In an embodiment of the present invention, the power storage device is a supercapacitor energy storage device.

In an embodiment of the present invention, the power outlet is also a docking socket for releasably securing an external device to the housing during data transfer and/or charging.

In an embodiment of the present invention, charging is facilitated by attaching a separate docking and charging station to the housing of the apparatus before or after the apparatus is mounted on the overhead power lines. This means that the docking port and associated components can be arranged in an add-on part, to be securely attached to a power harvesting station attachable to an overhead power line. The docking port may however also be an integral part of the station.

In an embodiment of the present invention, the docking and charging station comprises means for controllably attaching, storing, charging and releasing an external device (such as in particular a UAV) from the apparatus.

In an embodiment of the present invention, the data transceiver unit comprises electronic equipment for transmitting and receiving communications/data using standard protocols for networks such as, but not limited to, 3GPP based cellular networks such as GSM, UMTS, LTE, NB-IoT, LTE-M, EC-GSM-IoT and 5G-NR, wireless local area networks including IEEE 802.11, satellite networks, Wireless Personal Area Networks including IEEE 802.15 (e.g. Bluetooth, ZigBee, Z-Wave, LoRa), Ethernet networks including IEEE 802.3 or other wired serial protocols e.g. RS232, RS485, I2C, SPI, Modbus.

In an embodiment of the present invention, the apparatus (the data transceiver unit) further comprises means for collecting data obtained from the drones and transmit to a remote data platform for storing, processing and analysing data from the drones.

In an embodiment of the present invention, the apparatus further comprises means for processing data from an external device (e.g. UAV) and sending the results back to the external device.

In an embodiment of the present invention, the docking and charging station further comprises means for sending data from the devices and/or processed data to a remote IT platform, and to receive data from the remote IT platform to be relayed to the drones.

In an embodiment of the present invention, all components of the apparatus which require energy are only powered by the power harvesting unit.

In an embodiment of the present invention, the power harvesting unit further comprises i) a power harvesting section, ii) a control and supervising section, and iii) an electrical power output section.

In an embodiment of the present invention the power harvesting section comprises i) at least one current transformer unit, ii) a DC/DC regulation module, and iii) a charging control section.

In an embodiment of the present invention the power harvesting section comprises one or more current transformer units, where each current transformer unit comprises: i) a core configured to be located around a primary wire, ii) one secondary winding arranged around each of the at least one core, wherein each secondary winding has a first end and a second end, iii) a rectifier configured to convert an alternating current to a direct current, wherein the rectifier comprises two AC connections for alternating current and two DC connections for direct current, wherein the first end and the second end of the secondary winding are connected to the AC connections of the rectifier, and iv) a current shunt arranged and configured to totally short the ends of the secondary winding, wherein a common load is connected to the DC connection of the current transformer unit, and wherein the DC connection of the rectifier of the current transformer unit is connected to the common DC power output in parallel.

In an embodiment of the present invention the power harvesting section comprises a plurality current transformer units. In such an embodiment, the rectifiers that are connected to the load are connected in parallel and for each current shunt, a shunt controller unit for controlling the state of the respective shunting unit. Furthermore, each shunt controller unit comprises a voltage level state input and is configured to control the state of the respective shunt unit in dependence of the voltage level state input, where each voltage level state input is based on a voltage across the load and where each shunt controller unit may comprise a clock input where each controller unit is configured to only change a state of the respective shunt unit in dependence of the clock input. Furthermore, in such an embodiment, the system further comprises a zero-crossing detection element for detecting zero crossing states of a sensed current and a system control unit, where the system control unit is configured to generate the voltage level state inputs for each shunt controller unit based on the voltage across the load.

In an embodiment of the present invention each rectifier comprises a plurality of MOSFETs, such as at least 4 MOSFETs.

In an embodiment of the present invention each current shunt comprises a plurality of MOSFETs, such as at least 2 MOSFETs.

In an embodiment of the present invention, the electric power output of each of the one or more current transformer units is independently connectable to common electric power output.

In an embodiment of the present invention, the current transformer units are independently switched on or off based on power required by common electric power output.

In an embodiment of the present invention the apparatus further comprises a connector and clamping mechanism for an external devices such as drones.

In an embodiment of the present invention the apparatus further comprises heaters to keep components of the unit and sensors within the range of their optimal recommended operating temperatures.

In an embodiment of the present invention the apparatus further comprises a cooling mechanism and air ventilation to keep components of the unit and sensors within range of their optimal operating temperatures, such as cooling fans for central processing units (CPUs) and DC/DC power modules.

In an embodiment of the present invention the apparatus further comprises an antenna for wireless telecommunication, mobile networks, satellite networks, Wi-Fi, Bluetooth and the Global Positioning System (GPS).

In an embodiment of the present invention the control and supervising section further comprises i) at least a primary controller, ii) a power management controller, and iii) a measurement and data acquisition module.

In an embodiment of the present invention the output section further comprises power outputs for the one or more sensing or measuring devices and a wireless telecommunication module.

In an embodiment of the present invention the operational platform is a software and data platform.

In an embodiment of the present invention the drone docking and charging station comprises telecom devices, e.g., mobile router using LTE connectivity (or other available Radio Access Networks), to connect to the outside world for the operation and maintenance of the **DDC** station and for transferring of data from drone to control centre.

In an embodiment of the present invention the drone docking and charging station comprises Wi-Fi wireless communication equipment that enables ethernet communication with external devices such as the **DCE** equipment and the drone, and other devices in the surroundings.

In an embodiment of the present invention the drone docking and charging station comprises wireless communication equipment based on IEEE 802.15 standards (e.g. Bluetooth, ZigBee, Z-wave, LoRa) that enables wireless communication with external devices such as the **DCE** and the drone, and other devices in the surroundings.

In an embodiment of the present invention the drone docking and charging station comprises LoRa wireless communication equipment that enables wireless communication with external devices such as the **DCE,** the drone, and other devices in the surroundings.

In an embodiment of the present invention the drone docking and charging station comprises Serial Infrared Transceivers that enables wireless (infrared) communication between the **DDC** station and the drone or its **DCE** and are used to guide the **DCE** and drone at the final stage of docking and connection to the **DDC** station.

In an embodiment of the present invention the drone docking and charging station comprises LiDAR transceiver for precisely measuring the distance between the **DDC** station and the **DCE** and is used to guide the **DCE** at the final stage of docking and connection to the **DDC** station.

In an embodiment of the present invention the drone docking and charging station comprises High-definition camera that reads QR codes on the back of **DCE** and is used to guide the **DCE** at the final stage of docking and connection to the **DDC** station.

In an embodiment of the present invention the drone docking and charging station comprises RTK base station for improved accuracy of the GNSS based drone positioning device, like GPS or other type, that acts as a RTK rover.

In an embodiment of the present invention the drone docking equipment comprises Wi-Fi wireless communication equipment that enables ethernet communication with the **DDC** station and the drone.

In an embodiment of the present invention the drone docking equipment comprises wireless communication equipment based on IEEE 802.15 standards (e.g. Bluetooth, ZigBee, Z-wave, LoRa) that enables wireless communication with external devices such as the **DCE** equipment and the drone, and other devices in the surroundings.

In an embodiment of the present invention the drone docking equipment comprises LoRa wireless communication equipment that enables wireless communication with external devices such as the **DCE** equipment, the drone, and other devices in the surroundings.

In an embodiment of the present invention the drone docking equipment comprises Serial Infrared Transceivers that enable wireless (infrared) communication between the **DDC** station and the **DCE** and are used to guide the **DCE** and drone to the final stage of docking and connection to the **DDC** station.

In an embodiment of the present invention the drone docking equipment comprises wired serial communication devices protocols, such as, but not limited to RS232, RS485, I²C and SPI for communication between the **DCE** and the flight control unit of the drones it is attached to.

In an embodiment of the present invention the drone docking equipment comprises ambient light detectors.

In an embodiment of the present invention the at least one docking and charging device and the one or more drones further comprise multiple Infrared Serial Transceivers for high-precision two-way aerial navigation for the final approach to the drone docking funnel of the drone docking unit.

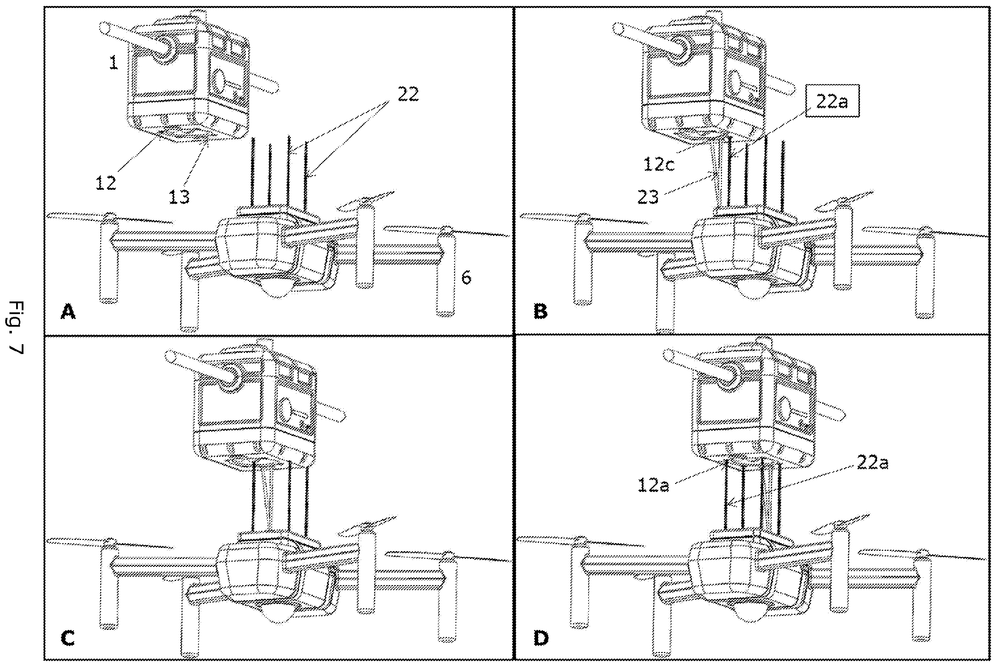

In an embodiment of the present invention the multiple Infrared Serial Transceivers communicate using unique two-way communication protocol that communicates the exact position of the drone docking unit underneath the docking and charging device. Thus, in an illustrative embodiment, an Infrared Serial Transceiver A of the drone docking unit must be exactly in line with Infrared Serial Transceiver A of the docking and charging device (DDC) for the drone to be correctly aligned and positioned. The same applies to the Infrared Serial Transceivers B, C and D, which all have respective corresponding transceivers on the DDC. This is illustrated in Figure 7.

In an embodiment of the present invention the Infrared Serial Transceivers communication data includes the unique identification number of each of the plurality of Infrared Serial Transceivers, such as two or three or preferably at least four, e.g. one in or near each corner of the bottom of the docking and charging device and a corresponding one in each corner on the top of the drone docking unit or the drone himself.

In an embodiment of the present invention positioning data includes not only the Serial Infrared Transceiver's transmitted data but also includes high precision measurement data of a LiDAR transceiver in the docking and charging device allowing for centimetre precision in measuring the distance between the docking and charging device and the drone docking unit right before docking.

In an embodiment of the present invention the Serial Infrared Transceivers take over all data communication between the docking and charging device and the drone docking unit when electrostatic discharge and other high-frequency interference in the surroundings can prevent normal operation of other wireless communication devices that are sensitive to electrostatic and electromagnetic interference.

It should be noted that the above aspect and novel use of pairwise infrared transceivers for accurate alignment of a UAV for docking and landing can as such be used in other configurations. Thus, in one embodiment a docking and charging station can have an upwardly facing docking port and infrared transceivers facing upwardly, for a drone with an appropriate docking mechanism to land and dock from above, and having downwardly facing infrared transceivers communicating with the transceivers of the station, and thus the UAV will have to correctly pair the transceivers and then it is accurately aligned for landing, essentially as described above except the UAV lands from above to an upwardly facing docking port.

### Description of various embodiments

The present invention will become more fully understood from the detailed description given hereinafter and the accompanying drawings which are given by way of illustration only, and thus, are not limitative of the present invention, and wherein:

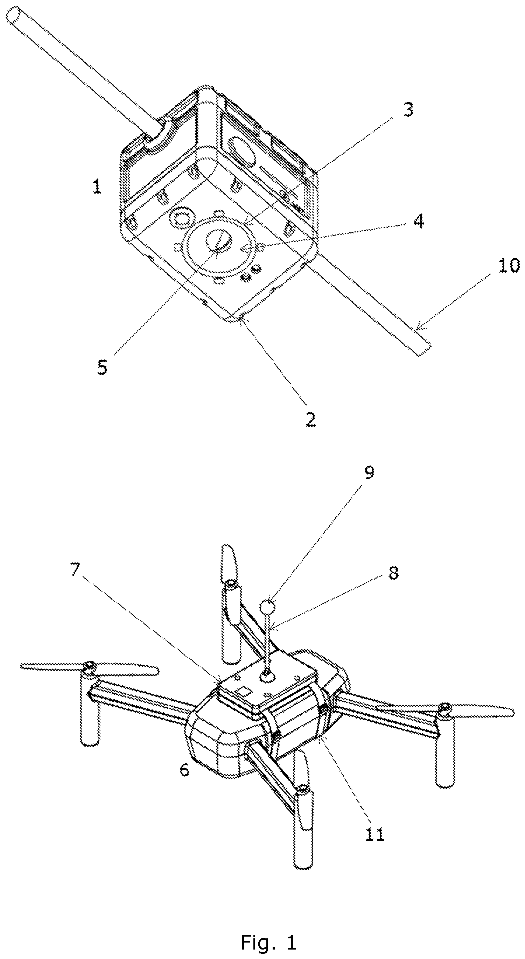

Figure 1 outlines the main components of the system of the present invention for providing an apparatus for charging and/or data communication with drones. The figure shows a drone docking and charging station (DDC) 1 clamped onto a phase wire 10 of an overhead power line. The drone docking and charging station 1 comprises a housing 2 and a docking and charging unit 3 underneath the housing. In the embodiment shown in Fig.1 the docking and charging unit is arranged within the bottom surface of the housing 2, where the docking and charging unit 3 is divided into a guiding portion 4 and a securing portion 5 for controllably docking, securing, storing/parking, and releasing a drone from the docking and charging device. The figure also shows a drone 6 having a docking and connecting unit (DCE) 7 attached to the drone, where docking and connecting unit 7 comprises a docking probe 8 and a connecting portion 9 having a mating structure to fit with the securing portion 5 of the to the docking and charging unit 3. The docking and connecting unit 7 is attached to the drone by a strapping bridle 11 such that the docking and connecting unit 7 is positioned on the top surface of the drone for docking underneath the drone docking and charging station 1 according to the invention.

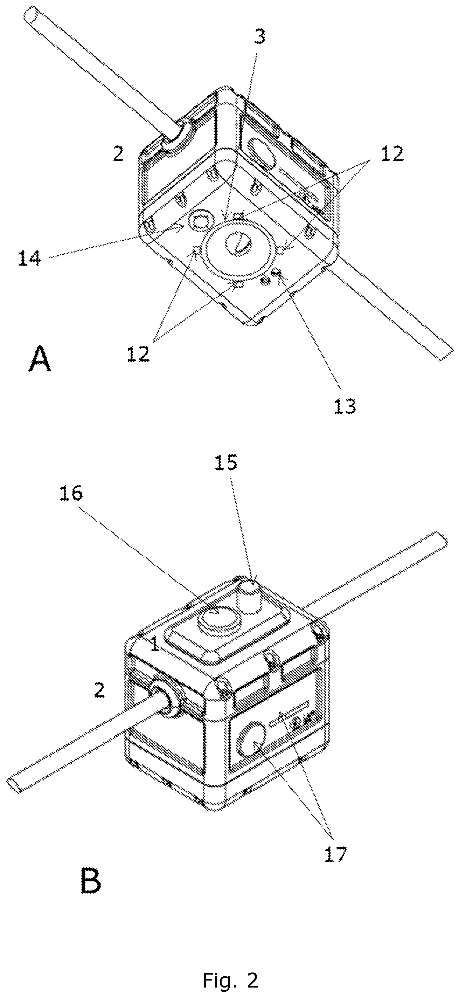

Figure 2 shows an array of communication devices on the drone docking and charging station 1 of the present invention. In Fig. 2A, Four Infrared Serial Transceivers 12 are indicated on the bottom surface of housing 2 of the docking and charging station 1 around the docking and charging unit 3, for communication with compatible or mating Infrared Serial Transceivers on a drone (not shown) or its associated DCE, to enable high-precision aerial navigation during the final docking distance of a drone to the drone docking unit 3 of the docking and charging station 1. Furthermore, the docking and charging station 1 further comprises a LiDAR transceiver 13 indicated in the bottom surface of the docking and charging station housing 2 to provide both distant and local measurement for high-precision aerial navigation of the drone in the final distance of travel to the docking and charging station 1. Furthermore, a high-resolution camera 14 is shown in the bottom surface of the docking and charging station 1 for reading a QR-code on the top surface of a drone (not shown) to contribute to high-precision aerial navigation in the final travelling and docking distance of a drone to the docking and charging unit 3 of the DDC.

In Fig. 2B a RTK base station 15 is shown in the top surface of the docking and charging station housing 2 for improved docking accuracy of a GNSS based drone comprising a RTK rover device. Furthermore, a mobile communication antenna 16 is shown on the top surface of the docking and charging station housing 2 as well as additional antennas 17 for communication standards such as but not limited to Wi-Fi, Bluetooth, and Zigbee, etc.

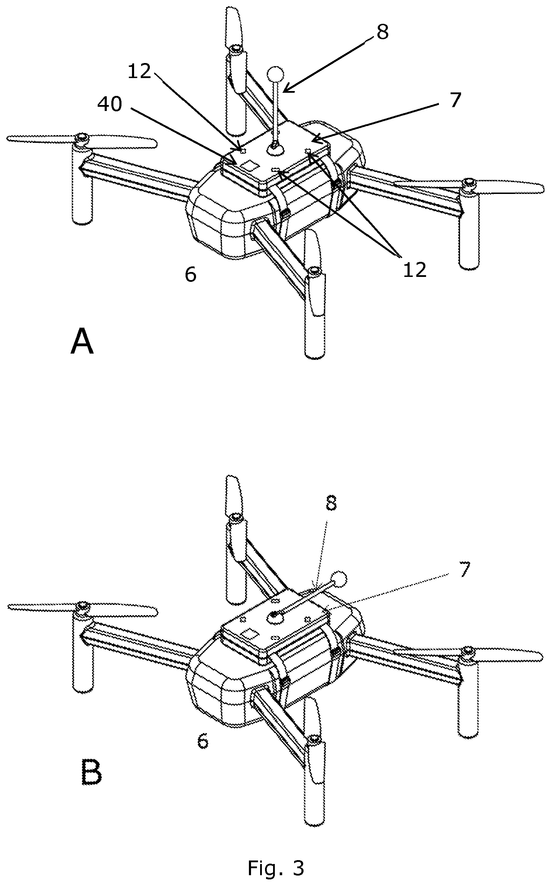

Figure 3 shows a perspective top view of a flying drone with the docking probe 8 in an erected docking position (A) and in a travelling horizontal position (B). The drone 6 in this configuration has a docking and connecting unit 7 attached to the top surface of the drone housing. The drawing shows a flying drone with an erected docking probe 8. Four Infrared Serial Transceivers 12 are indicated near the corners of the top surface of the docking and connecting unit 7 for communication with compatible or mating Infrared Serial Transceivers in a docking and charging station 1 (not shown) to enable high-precision aerial navigation during the final docking distance of a drone to the drone docking unit 3 of the docking and charging station 1. A QR code 40 is shown on the top surface of the docking and connecting unit 7 for identification by a high-resolution camera in the bottom surface of the docking and charging station housing 2 (not shown) to contribute to high-precision aerial navigation in the final travelling and docking distance of a drone to a docking and charging unit 3.

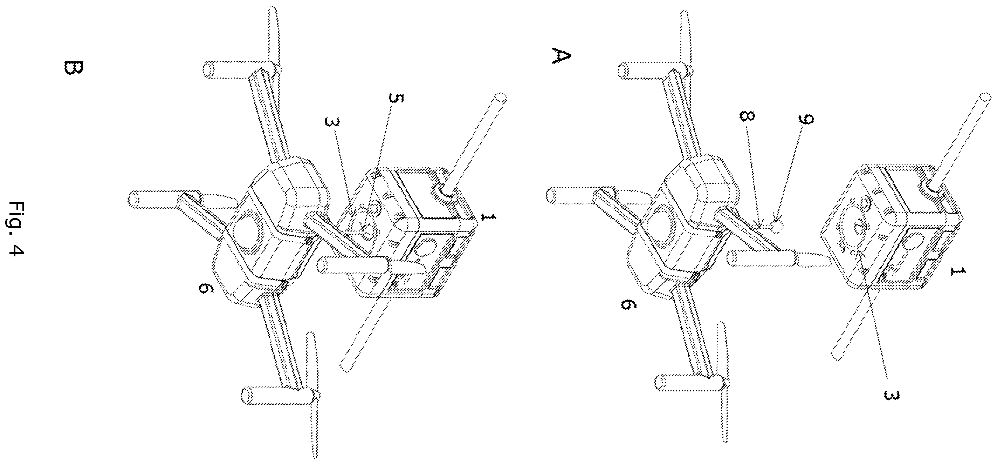

Figure 4 shows a drone 6 approaching a drone docking station 1 (Fig 4A) with the docking probe 8 in an erected docking position and a hemispherical shaped connection portion 9 at the end of the docking probe 8. In Fig. 4B the drone 6 is sitting securely in the drone docking station 1 where the mating gripping portion 5 of the drone docking unit 3 is holding the hemispherical shaped connection portion 9 at the end of the docking probe 8.

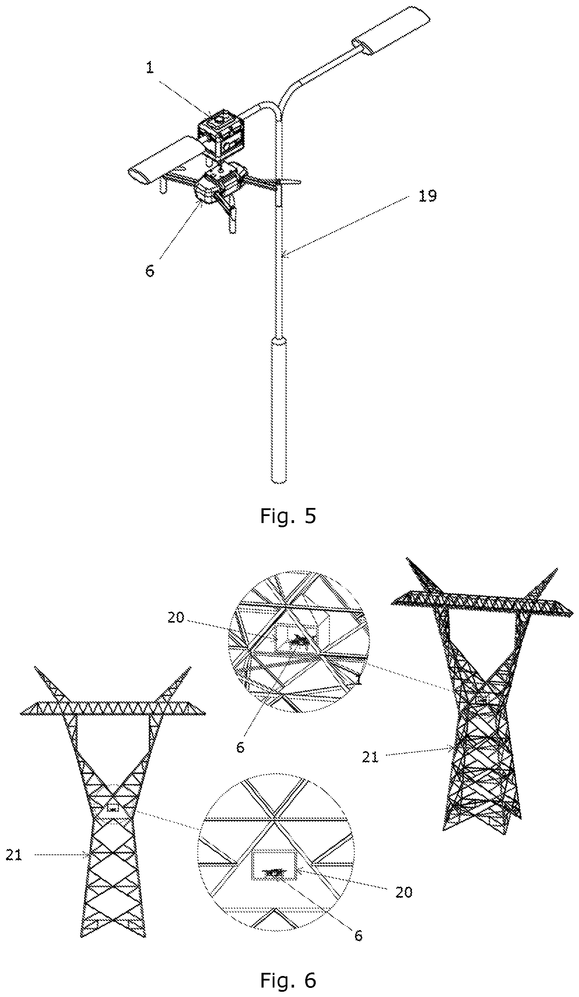

Figure 5 shows an embodiment of the present invention where the drone docking station 1 is clamped onto a light pole 19 and a drone 6 is shown approaching the station 1 from below for docking the station from underneath.

In figure 6 an embodiment is shown where a drone 6 is parked in a shelter 20, which is secured in a mast structure 21 of a power grid, the shelter being advantageous for protecting the drone during a longer parking period or in extreme weather conditions.

Figure 7 illustrates in four panels an embodiment where multiple Infrared Serial Transceivers are arranged in four pairs for alignment of a UAV for docking.

Panel A: The UAV is approaching the docking and charging station. Serial Infrared Transceivers on the UAV (or associated docking and charging anchor unit fastened to the UAV (**DCE**)) starts sending aerial navigation signals looking for mating Serial Infrared Transceivers on the docking and charging station (**DDC**).

Panel B: The **DCE** Serial Infrared Transceiver 22a data communication signal is detected at Serial Infrared Transceiver **12c** on the **DDC** station, which is incorrect position so the UAV continues aerial navigation to correct its position underneath the **DDC** station before docking. Because the **DDC** station has detected the **DCE** Serial infrared Transceiver signal, it turns on the LiDAR transceiver 23 to start measuring distance between the **DDC** station and the **DCE** with millimetre resolution.

Panel C: The UAV (or associated **DCE**) on the drone continues aerial navigation to reach correct position underneath the **DDC** station before docking.

Panel D: All four Serial Infrared Transceivers on the UAV (or **DCE**) are now aligned and communicating with their mating counterparts on the **DDC** station so the **UAV** is correctly aligned and positioned right underneath the centre of the **DDC** station. Therefore, the UAV with the aid of LiDAR transceiver 23 can navigate upwards to the docking funnel (guiding funnel) and into to the docking port of the **DDC** station.

### Example 1 - Serial infrared communication protocol for drones

In the example, there are four Serial Infrared Transceivers underneath the top lid of the **DCE** equipment, one in each corner. The infrared transceivers communicate with identical transceivers in the four corners at the bottom of the **DDC** station to enable the **DCE** equipment and the drone it is attached to, to be precisely guided the last meters before connecting to the **DDC** station. The view angles of the infrared transceivers are kept narrow to ensure that the transceivers must be in direct line of sight with the mating infrared transceiver on both sides to secure that the **DCE** equipment docking probe is directly below the centre of the **DDC** station to find the way into the docking funnel and docking port of the **DDC** station. Each infrared transceiver has its own identification code to facilitate the drone's guidance, i.e., the correct azimuth heading, the precise location and height underneath the docking funnel of the **DDC** station, the last meters to the charging station. This is to secure the docking probe lands directly in the docking funnel underneath the **DDC** station.

The docking probe, which may be made of conductive material, and is located on top of the **DCE** equipment, has two functions; i) to dock and attach the drone securely to the **DDC** station and ii) to connect the charging current from the **DDC** station through the **DCE** equipment to the battery charging port of the drone. The drone reports to the **DDC** station, either directly or through the **DCE** equipment by the aid of wired serial communication, what voltage levels are required for the drone battery pack (3.7V - 7.4V - 11.1V - 14.8V - 18.5 - V22.2V - etc.) and also the charging rate curve to secure correct voltage and current levels for the charging process.

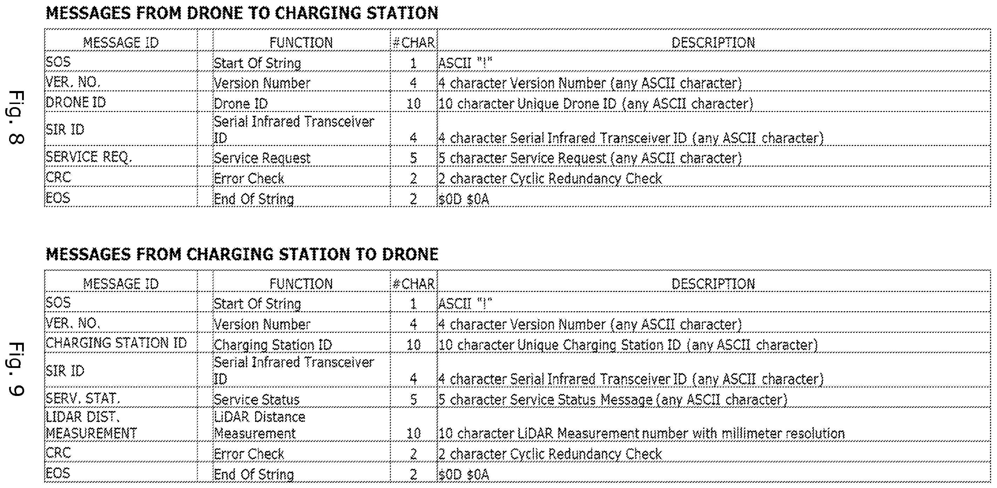

The Serial Communication protocol shown in Figs. 8-10 works as follows:
The Serial Infrared Transceiver connects to microcontroller in the communicating devices (**DDC** and **DCE**) through standard UART interface. The maximum transmitting distance between two Serial Infrared Transceivers is 8 meters. The bit rate ranges from 9.6 kbit/s up to 115.2 kbit/s. Figure 8 outlines a communication protocol from a drone to a charging station, where a limited set of data commands and responds messages sent from drone or **DCE** equipment to a **DDC** station. In Fig. 9 a communication protocol used for communication from a charging station to a drone, where a limited set of data commands and response messages sent from **DDC** station to a **DCE** or the drone are shown.

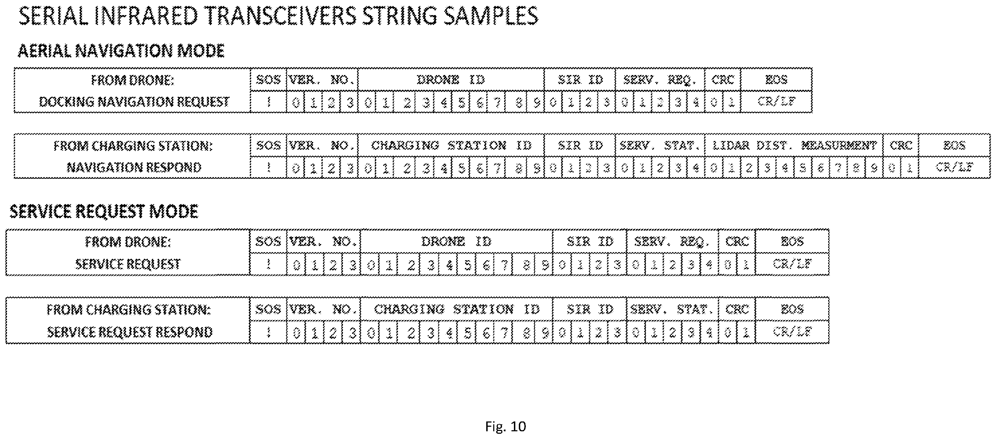

The Serial Infrared Transceiver aerial guiding function and data communication are based on proprietary communication protocols designed by the present inventor. Below are few samples of many regarding data request and command strings used in this application. Those samples are not limited and may be subjected to changes, if applicable, in different embodiments of the proposed invention. Figure 8 outlines a communication protocol for communication from a drone to a charging station, where a limited set of data commands and response messages sent from drone or from **DCE** to **DDC** station are shown. Fig. 9 shows a communication protocol used for communication from a charging station to a drone, where a limited set of data commands and response messages sent from a **DDC** station to a **DCE** or the drone are shown. Figure 10 shows serial infrared transceivers string samples in an aerial navigation mode and in a service request mode. The samples are indicated as data string samples showing data payload sent between **DCE** (drone) and **DDC** station during docking process (in Aerial Navigation Mode) and as data string samples showing data payload sent between **DCE** (drone) and **DDC** station during charging process (in Service Request Mode).

As used herein, including in the claims, singular forms of terms are to be construed as also including the plural form and vice versa, unless the context indicates otherwise. Thus, it should be noted that as used herein, the singular forms "a," "an," and "the" include plural references unless the context clearly dictates otherwise.

Throughout the description and claims, the terms "comprise", "including", "having", and "contain" and their variations should be understood as meaning "including but not limited to", and are not intended to exclude other components.

The present invention also covers the exact terms, features, values and ranges etc. in case these terms, features, values and ranges etc. are used in conjunction with terms such as about, around, generally, substantially, essentially, at least etc. (i.e., "about 3" shall also cover exactly 3 or "substantially constant" shall also cover exactly constant).

The term "at least one" should be understood as meaning "one or more", and therefore includes both embodiments that include one or multiple components. Furthermore, dependent claims that refer to independent claims that describe features with "at least one" have the same meaning, both when the feature is referred to as "the" and "the at least one".

Use of exemplary language, such as "for instance", "such as", "for example" and the like, is merely intended to better illustrate the invention and does not indicate a limitation on the scope of the invention unless so claimed. Any steps described in the specification may be performed in any order or simultaneously, unless the context clearly indicates otherwise.

All of the features and/or steps disclosed in the specification can be combined in any combination, except for combinations where at least some of the features and/or steps are mutually exclusive. In particular, preferred features of the invention are applicable to all aspects of the invention and may be used in any combination within the scope of the appended claims.

## Claims

1. A docking and charging station for an unmanned aerial vehicle (UAV) comprising:
- a housing configured to be clamped onto a conductor of an overhead power line,
- a power harvesting section for harvesting power from the electromagnetic field surrounding the conductor,
- a power supply unit that receives power from said power harvesting unit,
- a communication module, and
- a docking port arranged underneath the housing, for receiving and docking a docking and charging unit extending upwardly from an UAV, said docking port and said docking unit providing an electrical connection for charging a docked UAV,
wherein the power harvesting section comprises a plurality of current transformer units each having its own a short-circuiting shunt, rectification circuit, and smoothing capacitor, and which are parallel connected to a common power supply output, and wherein a secondary winding of each current transformer is configured to be shortcircuited a current shunt when not needed, and wherein the DC power output connection of each rectifier of the current transformer unit(s) is connected in parallel.

2. The docking and charging station according to any of claim 1, which is powered only by said power harvesting unit.

3. The docking and charging station according to claim 1, comprising a charging unit for fast-charging the UAV, powered by said power harvesting unit.

4. The docking and charging station according to claim 1, wherein the power supply unit comprises a supercapacitor energy storage device for said fast charging of the UAV.

5. The docking and charging station according to any of the preceding claims, wherein the docking port comprises a guiding and securing portion for controllably docking, securing, storing/parking, and releasing said UAV.

6. The docking and charging station according to claim 5, wherein the guiding portion comprises a conical or funnel-shaped structure in the bottom surface of the housing for receiving the mating docking unit of said UAV.

7. The docking and charging station according to claim 5, wherein the guiding and securing portion comprises a clamping or gripping mechanism for securing the docking and charging unit of the UAV to the docking and charging station.

8. The docking and charging station according to any of the preceding claims, comprising one or more of:
- Infrared Serial Transceiver(s),
- LiDAR sensor(s),
- RTK base station, and
- high-resolution camera
for navigation of the UAV to the docking and charging station.

9. A system for providing docking, charging and data communication with UAVs, said system comprising:
- at least one docking and charging station as defined in any of claims 1 to 8,
- one or more UAV, and
wherein the one or more UAV each comprises said docking and unit configured to mate to the docking port of the docking and charging station, said docking unit being arranged on the top said each UAV.

10. The system according to claim 9, wherein the docking unit on said UAV comprises a docking probe and a connecting head or anchor having a mating structure to the docking port on said docking and charging station, wherein the docking unit is either:
i) arranged within the housing of the UAV, with said docking probe and a connecting head or anchor extending upwardly from said housing of the UAV, or,
ii) removably secured to the exterior of said UAV, the docking unit comprising an electrical connection for charging and data transmission.

11. The system according to claim 10, wherein the docking probe comprises a rod which is configured to be in a horizontal position essentially aligned with the top surface in resting or flight mode, and to be erected to a substantially upright position in docking mode.

12. The system according to any of claims 9 to 11, wherein the at least one docking and charging station further comprises a RTK base station for improved flight navigation and docking accuracy, and said UAV being GNSS based and further comprising a RTK rover device such as, but not limited to GPS devices.

13. The system according to any of claims 9 to 12, wherein the at least one docking and charging station further comprises data processing means for processing data received from the UAV.

14. The system according to claim 13, wherein the data processing is used to locate the position of objects or events occurring on or near the power line, such as line fault events, fires and icing.

15. The system according to claim 9, wherein the communication module comprises a transceiver device for communicating with the one or more UAVs.

16. The system according to claim 9, wherein the docking and charging station communicates with said one or more UAVs either wirelessly or using wired connection.

17. The system according to claim 9, wherein the system further comprises a remote data platform for receiving data obtained by the one or more UAVs and for sending data to the one or more UAVs.

18. The system according to claim 17, wherein the docking and charging station further comprises means for collecting, storing, processing and communicating data received from the one or more UAVs to the remote data platform, and for communicating data from the remote data platform to the one or more UAVs.

19. The system according to claim 9, wherein the system further comprises one or more wireless networking mesh devices for transmitting data from the one or more docking and charging stations and/or relaying data to location providing mobile coverage or other means of telecommunication for communicating with remote platform.

## Patentansprüche

1. Docking- und Ladestation für ein unbemanntes Luftfahrzeug (Unmanned Aerial Vehicle, UAV), umfassend:
- ein Gehäuse, das dazu gestaltet ist, an einen Leiter einer Überlandleitung geklemmt zu werden,
- einen Energieabnahmeabschnitt zum Abnehmen von Energie aus dem elektromagnetischen Feld, das den Leiter umgibt,
- eine Energieversorgungseinheit, die Energie von der Energieabnahmeeinheit aufnimmt,
- ein Kommunikationsmodul und
- einen Docking-Anschluss, der unter dem Gehäuse angeordnet ist, zum Aufnehmen und Andocken einer Docking- und Ladeeinheit, die sich von einem UAV aufwärts erstreckt, wobei der Docking-Anschluss und die Docking-Einheit eine elektrische Verbindung zum Laden eines angedockten UAV bereitstellen,
wobei der Energieabnahmeabschnitt mehrere Stromwandlereinheiten umfasst, die jeweils ihren eigenen Überbrückungs-Shunt, Stromrichterschaltkreis und Glättungskondensator aufweisen und die mit einem gemeinsamen Energieversorgungsausgang parallel verbunden sind, und
wobei eine Sekundärwicklung jedes Stromwandlers dafür gestaltet ist, durch einen Strom-Shunt überbrückt zu werden, wenn sie nicht benötigt wird, und wobei die Gleichstromenergie-Ausgangsverbindung jedes Stromrichters der Stromwandlereinheit(en) parallel verbunden ist.

2. Docking- und Ladestation nach Anspruch 1, der ausschließlich durch die Energieabnahmeeinheit mit Energie versorgt wird.

3. Docking- und Ladestation nach Anspruch 1, umfassend eine Ladeeinheit zum Schnellladen des UAV, durch die Energieabnahmeeinheit mit Energie versorgt.

4. Docking- und Ladestation nach Anspruch 1, wobei die Energieversorgungseinheit eine Superkondensator-Energiespeichervorrichtung für das Schnellladen des UAV umfasst.

5. Docking- und Ladestation nach einem der vorhergehenden Ansprüche, wobei der Docking-Anschluss ein Führungs- und Sicherungsteil zum steuerbaren Andocken, Sichern, Verstauen/Parken und Freigeben des UAV umfasst.

6. Docking- und Ladestation nach Anspruch 5, wobei das Führungsteil eine konische oder trichterförmige Struktur in der Bodenfläche des Gehäuses zum Aufnehmen der dazu passenden Docking-Einheit des UAV umfasst.

7. Docking- und Ladestation nach Anspruch 5, wobei das Führungs- und Sicherungsteil einen Klemm- oder Greifmechanismus zum Sichern der Docking- und Ladeeinheit des UAV an der Docking- und Ladestation umfasst.

8. Docking- und Ladestation nach einem der vorhergehenden Ansprüche, eines oder mehreres von Folgendem umfassend:
- (einen) serielle(n) Infrarot-Transceiver,
- (einen) LiDAR-Sensor(en),
- eine RTK-Basisstation und
- eine hochauflösende Kamera
zur Navigation des UAV zur Docking- und Ladestation.

9. System zum Bereitstellen von Andocken, Laden und Datenkommunikation mit UAVs, wobei das System Folgendes umfasst:
- mindestens eine Docking- und Ladestation nach einem der Ansprüche 1 bis 8,
- ein oder mehrere UAVs, und
wobei das eine oder die mehreren UAVs jeweils die Docking-Einheit umfassen, die dazu gestaltet ist, zu dem Docking-Anschluss der Docking- und Ladestation zu passen, wobei die Docking-Einheit an der Oberseite jedes UAV angeordnet ist.

10. System nach Anspruch 9, wobei die Docking-Einheit an dem UAV eine Docking-Sonde und einen Verbindungskopf oder -anker mit einer Struktur umfasst, die zu dem Docking-Anschluss an der Docking- und Ladestation passt, wobei die Docking-Einheit entweder:
i) in dem Gehäuse des UAV angeordnet ist, wobei sich die Docking-Sonde und ein Verbindungskopf oder -anker von dem Gehäuse des UAV aufwärts erstrecken, oder
ii) abnehmbar außen an dem UAV gesichert ist, wobei die Docking-Einheit eine elektrische Verbindung zum Laden und zur Datenübertragung umfasst.

11. System nach Anspruch 10, wobei die Docking-Sonde eine Stange umfasst, die dazu gestaltet ist, im Ruhe- oder Flugmodus in einer horizontalen Position zu sein, im Wesentlichen fluchtend mit der Oberseite, und im Docking-Modus zu einer im Wesentlichen senkrechten Position aufgerichtet zu sein.

12. System nach einem der Ansprüche 9 bis 11, wobei die mindestens eine Docking- und Ladestation ferner eine RTK-Basisstation zur verbesserten Flugnavigation und Docking-Genauigkeit umfasst und das UAV auf GNSS basiert und ferner eine RTK-Rover-Vorrichtung umfasst wie insbesondere GPS-Vorrichtungen.

13. System nach einem der Ansprüche 9 bis 12, wobei die mindestens eine Docking- und Ladestation ferner Datenverarbeitungsmittel zum Verarbeiten von Daten, die von dem UAV empfangen werden, umfasst.

14. System nach Anspruch 13, wobei die Datenverarbeitung verwendet wird, um die Position von Objekten oder Ereignissen zu bestimmen, die an oder nahe der Energieleitung auftreten, wie Leitungsstörungsereignisse, Brände und Vereisung.

15. System nach Anspruch 9, wobei das Kommunikationsmodul eine Transceiver-Vorrichuntg zum Kommunizieren mit dem einen oder den mehreren UAVs umfasst.

16. System nach Anspruch 9, wobei die Docking- und Ladestation entweder drahtlos oder unter Verwendung drahtgebundener Kommunikation mit dem einen oder den mehreren UAVs kommuniziert.

17. System nach Anspruch 9, wobei das System ferner eine ferne Datenplattform zum Empfangen von Daten, die durch das eine oder die mehreren UAVs gewonnen werden, sowie zum Senden von Daten an das eine oder die mehreren UAVs umfasst.

18. System nach Anspruch 17, wobei die Docking- und Ladestation ferner Mittel zum Erfassen, Speichern, Verarbeiten und Kommunizieren von Daten, die von dem einen oder den mehreren UAVs empfangen werden, an die ferne Datenplattform und zum Kommunizieren von Daten von der fernen Datenplattform an das eine oder die mehreren UAVs umfasst.

19. System nach Anspruch 9, wobei das System ferner eine oder mehrere drahtlose Mesh-Netzwerkvorrichtungen zum Übertragen von Daten von der einen oder den mehreren Docking- und Ladestationen und/oder zum Weiterleiten von Daten an einen Standort, der Mobilfunkabdeckung bereitstellt, oder andere Mittel der Telekommunikation zur Kommunikation mit der fernen Plattform umfasst.

## Revendications

1. Station d'accueil et de charge pour un véhicule aérien sans pilote (UAV) comprenant :
- un boîtier configuré pour être attaché sur un conducteur d'une ligne électrique aérienne,
- une section de récupération d'énergie pour récupérer de l'énergie à partir du champ électromagnétique entourant le conducteur,
- une unité d'alimentation électrique qui reçoit de l'énergie de ladite unité de récupération d'énergie,
- un module de communication, et
- une station d'accueil agencée sous le boîtier, pour recevoir et accueillir une unité d'accueil et de charge s'étendant vers le haut à partir d'un UAV, ladite station d'accueil et ladite unité d'accueil fournissant une connexion électrique pour charger un UAV accueilli, dans laquelle la section de récupération d'énergie comprend une pluralité d'unités de transformateur de courant ayant chacune son propre shunt de courtcircuitage, circuit de redressement, et condensateur de lissage, et qui sont connectées en parallèle à une sortie d'alimentation électrique commune, et
dans laquelle un enroulement secondaire de chaque transformateur de courant est configuré pour être courtcircuité par un shunt de courant lorsqu'il n'est pas nécessaire, et dans laquelle la connexion de sortie de puissance CC de chaque redresseur de l'unité ou des unités de transformateur de courant est connectée en parallèle.

2. Station d'accueil et de charge selon la revendication 1, qui est alimentée uniquement par ladite unité de récupération d'énergie.

3. Station d'accueil et de charge selon la revendication 1, comprenant une unité de charge de charge rapide de l'UAV, alimentée par ladite unité de récupération d'énergie.

4. Station d'accueil et de charge selon la revendication 1, dans laquelle l'unité d'alimentation électrique comprend un dispositif de stockage d'énergie de supercondensateur pour ladite charge rapide de l'UAV.

5. Station d'accueil et de charge selon l'une quelconque des revendications précédentes, dans laquelle le port d'accueil comprend une portion de guidage et de fixation pour un accueil, une fixation, un stockage/stationnement, et une libération de manière contrôlable dudit UAV.

6. Station d'accueil et de charge selon la revendication 5, dans laquelle la portion de guidage comprend une structure conique ou en forme d'entonnoir dans la surface inférieure du boîtier pour recevoir l'unité d'accueil appariée dudit UAV.

7. Station d'accueil et de charge selon la revendication 5, dans laquelle la portion de guidage et de fixation comprend un mécanisme d'attache ou de préhension pour fixer l'unité d'accueil et de charge de l'UAV à la station d'accueil et de charge.

8. Station d'accueil et de charge selon l'une quelconque des revendications précédentes, comprenant un ou plusieurs éléments parmi :
- émetteur(s)-récepteur(s) série à infrarouge,
- capteur(s) LiDAR,
- station de base RTK, et
- caméra haute résolution
pour une navigation de l'UAV vers la station d'accueil et de charge.

9. Système pour fournir une communication d'accueil, de charge et de données avec des UAV, ledit système comprenant :
- au moins une station d'accueil et de charge telle que définie dans l'une quelconque des revendications 1 à 8,
- un ou plusieurs UAV, et
dans lequel les un ou plusieurs UAV comprennent chacun ladite unité d'accueil configurée pour s'apparier au port d'accueil de la station d'accueil et de charge, ladite unité d'accueil étant agencée sur le dessus de chaque dit UAV.

10. Système selon la revendication 9, dans lequel l'unité d'accueil sur ledit UAV comprend une sonde d'accueil et un ancrage ou une tête de connexion ayant une structure d'appariement au port d'accueil sur ladite station d'accueil et de charge, et dans lequel l'unité d'accueil est :
i) soit agencée à l'intérieur du boîtier de l'UAV, ladite sonde d'accueil et un ancrage ou une tête de connexion s'étendant vers le haut à partir dudit boîtier de l'UAV,
ii) soit fixée de manière amovible à l'extérieur dudit UAV, l'unité d'accueil comprenant une connexion électrique de charge et de transmission de données.

11. Système selon la revendication 10, dans lequel la sonde d'accueil comprend une tige qui est configurée pour être dans une position horizontale essentiellement alignée avec la surface de dessus en mode de repos ou de vol, et pour être dressée vers une position substantiellement verticale en mode d'accueil.

12. Système selon l'une quelconque des revendications 9 à 11, dans lequel l'au moins une station d'accueil et de charge comprend en outre une station de base RTK pour une précision de navigation de vol et d'accueil améliorée, et ledit UAV étant à base GNSS et comprenant en outre un rover RTK tel que, à titre non limitatif, des dispositifs GPS.

13. Système selon l'une quelconque des revendications 9 à 12, dans lequel l'au moins une station d'accueil et de charge comprend en outre des moyens de traitement de données pour traiter des données reçues de l'UAV.

14. Système selon la revendication 13, dans lequel le traitement de données est utilisé pour localiser la position d'objets ou d'événements se produisant sur ou à proximité de la ligne électrique, tels que des événements d'anomalie de ligne, des incendies et du givrage.

15. Système selon la revendication 9, dans lequel le module de communication comprend un dispositif émetteurrécepteur pour communiquer avec les un ou plusieurs UAV.

16. Système selon la revendication 9, dans lequel la station d'accueil et de charge communique avec lesdits un ou plusieurs UAV soit sans fil, soit à l'aide d'une connexion filaire.

17. Système selon la revendication 9, dans lequel le système comprend en outre une plateforme de données à distance pour recevoir des données obtenues par les un ou plusieurs UAV et pour envoyer des données aux un ou plusieurs UAV.

18. Système selon la revendication 17, dans lequel la station d'accueil et de charge comprend en outre des moyens pour collecter, stocker, traiter et communiquer des données reçues des un ou plusieurs UAV à la plateforme de données à distance, et pour communiquer des données de la plateforme de données à distance aux un ou plusieurs UAV.

19. Système selon la revendication 9, dans lequel le système comprend en outre un ou plusieurs dispositifs polygonaux de mise en réseau sans fil pour transmettre des données à partir des une ou plusieurs stations d'accueil et de charge et/ou relayer des données à un emplacement fournissant une couverture mobile ou d'autres moyens de télécommunication pour communiquer avec une plateforme distante.
